# EUROPEAN PATENT APPLICATION

(11) **EP 1 939 678 A1**
(43) Date of publication of application: **02.07.2008**
(21) Application number: 06797985.6
(22) Date of filing: 14.09.2006
(51) Int. Cl.: G02F 1/167, G02F 1/17

(54) **METHOD FOR PRODUCING DISPLAY MEDIUM, AND DISPLAY MEDIUM**

(30) Priority: 22.09.2005 JP 2005275618
(71) Applicant: Brother Kogyo Kabushiki Kaisha, Nagoya-shi, Aichi-ken 467-8561 (JP)
(72) Inventor: TOYODA, Yoshito, Nagoya-shi, Aichi 4678562 (JP)
(74) Representative: Smith, Samuel Leonard
(86) International application number: PCT/JP2006/318273
(87) International publication number: WO 2007/034735

(57) **Abstract**

A display medium (1) includes a first substrate (11), a second substrate (12), a partition wall member (13) and an electrophoretic medium (31). The first substrate (11) constitutes a display surface, and the second substrate (12) is disposed in opposition to the first substrate (11) for forming a fluid chamber (R) between the first substrate (11) and the second substrate (12). The partition wall member (13) is interposed between the first substrate (11) and the second substrate (12) and dividing the fluid chamber (R) into a plurality of cells (C). The plurality of cells (C) is filled with an electrophoretic medium (31) wherein a charged particle dispersion (33), including an organic solvent with dispersed charged particles (20), is dissolved or dispersed in a dispersion medium (34) for filling the plurality of cells (C). The display medium (1) displays an image on the display surface (10) by moving the charged particles (20) based on the directions of electric fields generated between the first substrate (11) and the second substrate (12). A method of manufacturing the display medium (1) includes a filling step for filling the plurality of cells (C) with the charged particle dispersion (33) before the partition wall member (13) is covered with the first substrate (11) and the second substrate (12), and an injection step for injecting the dispersion medium (34) for dissolving or dispersing the charged particle dispersion (33) into the plurality of cells (C) filled with the charged particle dispersion (33) in the injecting step"

## Description

### Technical Field

The present invention relates to a display medium and a method of manufacturing a display medium capable of improving image quality.

### Background Art

A display medium using electrophoresis to display images on a display surface is well known in the art. Patent Reference 1 discloses an example of an electrophoretic display element. This electrophoretic display element includes a pair of substrates, at least one of which serves as the display surface, partition members for dividing the space between the substrates into a plurality of compartments, and a display liquid containing charged particles injected into each of the compartments. The partition members have connecting passages formed therein to allow communication between neighboring compartments so that the display liquid injected into the compartments can flow into neighboring compartments through the connecting passages. This construction helps to reduce the occurrence of discoloration and the like in the dispersion fluid caused by flocculation and settling of the charged particles, and by UV rays, heat, and the like. Patent Reference 1: Japanese Patent No. 3,189,958

### Disclosure of Invention

### Technical Problem

One method of filling the compartments with the display liquid in the electrophoretic display element described above is to allow the liquid to flow into each of the compartments through the connecting passages while the partition members are interposed between the pair of substrates.

However, the charged particles contained in the display liquid are not distributed uniformly to each of the compartments due to pressure changes, channel resistance and the like when the display liquid passes through the connecting channels, and due to settling of the charged particles caused by the difference in specific gravity between the charged particles in the display liquid and the dispersion medium, resulting in display irregularities that reduce image quality.

To resolve the problems described above, it is an object of the present invention to provide a display medium and a method of manufacturing a display medium capable of improving image quality by suppressing such display irregularities.

### Technical Solution

In order to solve the above problem, this invention provides a display medium that includes a first substrate constituting a display surface, a second substrate disposed in opposition to the first substrate for forming a fluid chamber between the first substrate and the second substrate; a partition wall member interposed between the first substrate and the second substrate and dividing the fluid chamber into cells, and an electrophoretic medium wherein a charged particle dispersion including an organic solvent with dispersed charged particles is dissolved or dispersed in a dispersion medium for filling the cells. In this display medium, the charged particles move between the first substrate and the second substrate to display an image on the display surface based on the directions of electric fields generated between the first substrate and the second substrate. A method of manufacturing such a display medium includes a filling step for filling the cells with the charged particle dispersion before covered with the partition wall member between the first substrate and the second substrate, and an injection step for injecting the dispersion medium for dissolving or dispersing the charged particle dispersion into the cells filled with the charged particle dispersion in the filling step.

According to the structure described above, since each cell is filled with the charged particle dispersion with dispersed charged particles before partition wall member is covered with the first substrate and the second substrate, uniformly filling each cell with the charged particle dispersion is possible. Further, by mixing the charged particle dispersion and the dispersion medium injected in the injecting step, each cell can be filled with an electrophoretic medium uniformly having prescribed properties. As a result, display irregularities are suppressed, thereby improving the image quality.

Here, desirable is that the charged particle dispersion has a higher viscosity than the electrophoretic medium.

According to the structure described above, as the charged particle dispersion has a higher viscosity than the electrophoretic medium, an amount of the charged particle dispersion that splashes out of the cells can be suppressed, compared to the case of filling the cells directly with the electrophoretic medium having lower viscosity than the charged particle dispersion. Hence, the cells can be effectively and uniformly filled with the charged particle dispersion, thereby improving the manufacturing efficiency and the image quality.

Further, preferable is to have a vibrating step for vibrating the charged particle dispersion and the dispersion medium after the injection step.

According to the structure described above, since the charged particle dispersion and dispersion medium are vibrated in the vibrating step, an organic solvent included in the charged particle dispersion can be effectively dissolved or dispersed in the dispersion medium. Hence, display irregularities are suppressed, thereby improving the image quality.

Further, desirable is to have a voltage applying step for applying a voltage between the first substrate and the second substrate to move the charged particles within the cells during vibrating in the vibrating step.

According to the structure described above, as a voltage is applied between the first substrate and the second substrate during the vibration step, the charged particles move within the cells, thereby allowing an organic solvent included in the charged particle dispersion to get more effectively dissolved or dispersed in the dispersion medium. As a result, display irregularities are suppressed and the image quality can be improved.

Further desirable is to have a voltage applying step for applying a voltage between the first substrate and the second substrate so as to move the charged particles within the cells following the injection step.

According to the structure described above, as a voltage is applied between the first substrate and the second substrate after the injection step, the charged particles move within the cells, thereby allowing an organic solvent included in the charged particle dispersion to get more effectively dissolved or dispersed in the dispersion medium. Accordingly, display irregularities are suppressed and the image quality can be improved.

Further preferable is to make the cells have substantially the same capacity and to fill each cell with substantially the same volume of the charged particle dispersion in the filling step, thereby maintaining an injection space in each cell for injecting the dispersion medium in the injection step.

According to the structure described above, as each cell is filled with substantially the same volume of the charged particle dispersion while keeping an injection space for the dispersion medium to be injected, in each cell produced is an electrophoretic medium that has substantially uniform charged particles, as well as substantially uniform properties in viscosity, surface tension, resistivity, and the like. Hence, display irregularities are suppressed, thereby improving the image quality.

Further, in the filling step, desirable is to have a complete filling step for completely filling the cells with a volume of the charged particle dispersion substantially equal to the capacity of the cells, and a space forming step for forming the injection spaces in the cells after the cells are completely filled with the charged particle dispersion in the complete filling step.

According to this structure, the injection spaces having substantially the same volume are formed in each cell after the cells were completely filled with the charged particle dispersion. That is, the injection spaces can be formed by filling each cell with a substantially uniform volume of charged particle dispersion less than the capacity of the cells. However, due to the dense arrangement of the cells, forming spaces of the same volume in the cells through this method is difficult. Therefore, easier and more accurate is to form spaces of the same volume in each cell according to the method of filling the cells with substantially the same volume of charged particle dispersion as the capacity of the cells, and subsequently forming spaces of substantially the same volume in each cell. This method suppresses display irregularities, enhancing image quality.

Further, desirable is that the space forming step is a scraping step for scraping out substantially the same amount of the charged particle dispersion from the cells filled full in the complete filling step.

According to this structure, the injection spaces can be formed in each cell by scraping substantially the same volume of the charged particle dispersion filled in the filling step out of the cells. This simple mechanical operation enables the injection spaces having substantially the same volume to be formed easily and accurately in each cell, suppressing display irregularities, thereby improving the image quality.

Further, desirable is that the space forming step is a drying step for drying the charged particle dispersion in the cells completely filled in the complete filling step.

According to this structure, as the injection spaces are formed by drying the charged particle dispersion completely filled in each cell in the completely filling step, injection spaces having substantially the same volume can be formed easily and accurately in each cell, suppressing display irregularities, thereby improving the image quality.

Further, desirable is that the partition wall member includes a first structure joined with the first substrate and a second structure joined with the second substrate. A plurality of first cells of substantially the same capacity is formed in the first structure and a plurality of second cells of substantially the same capacity is formed in the second structure so as to oppose the first cells. Each cell includes one of the first cells and one of the second cells opposing the first cell. In the filling step, also desirable is to have a complete filling step for filling the first cells with the charged particle dispersion of substantially the same amount as the capacity of the first cells, and a joining step for joining the first structure and the second structure after the first cells are completely filled with the charged particle dispersion in the complete filling step.

According to this structure, as specific steps are not necessary to form the injection spaces, the injection spaces having substantially the same volume can be formed easily and accurately in each cell, suppressing display irregularities, thereby improving the image quality as well as the production efficiency.

Further desirable is that connecting parts are formed in the cells for connecting neighboring cells while the cells are interposed between the first substrate and the second substrate, that the dispersion medium has a lower viscosity than the charged particle dispersion, and that the dispersion medium is injected in the cells through the connecting parts when the cells are covered with the first substrate and the second substrate in the injection step.

According to this structure, since the dispersion medium having a lower viscosity than the charged particle dispersion is injected through connecting parts formed in the cells for connecting neighboring cells while the cells are interposed between the first substrate and the second substrate, the dispersion medium can be injected into the cells in a short amount of time and at a low pressure. Hence, the cells can have uniform dispersion of charged particles, suppressing display irregularities, thereby improving the image quality.

Further, desirable is that the connecting parts are of a size for allowing passage of the dispersion medium while restraining passage of the charged particles.

According to this structure, since the connecting parts are of a size for allowing passage of the dispersion medium while restraining passage of the charged particles, even if the display medium is tilted to the horizontal plane for a long period of time, the uneven concentration of charged particles distributed in each cell due to the migration of charged particles between cells through connecting parts are prevented, thereby suppressing display irregularities and enhancing the image quality.

Further, desirable is that a gap is formed between the first substrate and the partition wall member, and the dispersion medium is injected into the cells via the gap while the cells are interposed between the first substrate and the second substrate in the injection step.

According to this structure, since the dispersion medium is injected through the connecting parts for connecting neighboring cells, the dispersion medium can be injected into the cells in a short amount of time and at a low pressure. Hence, the cells can have uniform dispersion of charged particles, suppressing display irregularities, thereby improving the image quality.

Furthermore, in order to resolve the above problems, the present invention provides a display medium wherein a first substrate constitutes a display surface, a second substrate is disposed in opposition to the first substrate for forming a fluid chamber between the first substrate and the second substrate, a partition wall member is interposed between the first substrate and the second substrate and dividing the fluid chamber into cells, and an electrophoretic medium includes a charged particle dispersion having an organic solvent with dispersed charged particles dissolved or dispersed in a dispersion medium for filling the cells. In this display medium, the charged particles move between the first substrate and the second substrate to display an image on the display surface based on the directions of electric fields generated between the first substrate and the second substrate. This display medium further includes the connecting parts formed in the cells so as to provide communications between neighboring cells, and having a size for allowing the passage of the dispersion medium while restraining the passage of the charged particles when the cells are interposed between the first substrate and the second substrate.

According to this structure, since the connecting parts, the spaces for connecting neighboring cells, are of a size for allowing passage of the dispersion medium while restraining passage of the charged particles, even if the display medium is tilted to the horizontal plane for a long period of time, the uneven concentration of charged particles distributed in each cell due to the migration of charged particles between cells through connecting parts are prevented, thereby suppressing display irregularities and enhancing the image quality.

### Advantageous Effects

The display medium and method of manufacturing the display medium of the present invention can improve image quality by suppressing display irregularities.

### Brief Description of Drawings

Fig. 1(a) is a top view of a display medium manufactured by a method according to a preferred embodiment of the present invention.
Fig. 1(b) is a cross-sectional view of the display medium along the line B-B shown in Fig. 1(a).
Fig. 2 is an exploded perspective view of the display medium manufactured by a method according to a preferred embodiment of the present invention.
Fig. 3 is an enlarged perspective view of the surface of a partition wall member in the display medium manufactured by a method according to a preferred embodiment of the present invention.
Fig. 4 (a) is an explanatory diagram illustrating a step for fixing the partition wall member to the bottom substrate in the method of manufacturing the display medium according to a first embodiment.
Fig. 4(b) is an explanatory diagram illustrating a step for injecting charged particle dispersion in each cell with a dispenser in the method of manufacturing the display medium according to the first embodiment.
Fig. 4(c) is an explanatory diagram illustrating a step for filling all cells with the charged particle dispersion in the method of manufacturing the display medium according to the first embodiment.
Fig. 4(d) is an explanatory diagram illustrating a step for removing excess charged particle dispersion with a squeegee to even out the surface of the partition wall member in the method of manufacturing the display medium according to the first embodiment.
Fig. 4(e) is an explanatory diagram illustrating a step for scraping out charged particle dispersion from each cell C in the method of manufacturing the display medium according to the first embodiment.
Fig. 4(f) is an explanatory diagram illustrating a step for forming a space in each cell in the method of manufacturing the display medium according to the first embodiment.
Fig.. 4(g) is an explanatory diagram illustrating a step for fixing the frame member and top substrate to the bottom substrate and partition wall member in the method of manufacturing the display medium according to the first embodiment.
Fig. 4(h) is an explanatory diagram illustrating a step for injecting a dispersion medium into the spaces of the cells in the method of manufacturing the display medium according to the first embodiment.
Fig. 4(i) is an explanatory diagram illustrating a step for sealing the injection hole and discharge hole with sealing members in the method of manufacturing the display medium according to the first embodiment.
Fig. 5 is an explanatory diagram illustrating a step for vibrating the display medium with an ultrasonic vibrating mechanism in the method of manufacturing the display medium according to the first embodiment.
Fig. 6(a) is an explanatory diagram illustrating a step for placing the bottom substrate and partition wall member in a dryer after filling each cell with the charged particle dispersion in a method of manufacturing a display medium according to a second embodiment.
Fig. 6(b) is an explanatory diagram illustrating a step for forming a space in each cell in the method of manufacturing a display medium according to the second embodiment.
Fig. 7(a) is an explanatory diagram illustrating a step for filling all cells in a second partition member with the charged particle dispersion in a method of manufacturing a display medium according to a third embodiment.
Fig. 7(b) is an explanatory diagram illustrating a step for fixing the frame member to the bottom substrate and the second partition member and for bringing the first partition member and the top substrate near the bottom substrate and second partition member in the method of manufacturing a display medium according to the third embodiment.
Fig. 7(c) is an explanatory diagram illustrating a step for forming a space with each cell in the first partition member in the method of manufacturing a display medium according to the third embodiment,
Fig. 7(d) is a cross-sectional view of the display medium manufactured according to the method of the third embodiment.
Fig. 8(a) is an enlarged view of a first partition member viewed in the X-direction indicated by the arrow in Fig. 7(b) in the method of manufacturing a display medium according to the third embodiment.
Fig. 8(b) is an enlarged view of a second partition member viewed in the Y-direction indicated by the arrow in Fig. 7(b) in the method of manufacturing a display medium according to the third embodiment.
Fig. 9 (a) is an explanatory diagram illustrating a step for forming a space in each cell in a method of manufacturing a display medium according to a fourth embodiment.
Fig. 9(b) is an explanatory diagram illustrating a step for fixing the frame member to the bottom substrate and the partition wall member and for bringing the top substrate near this assembly in the method of manufacturing a display medium according to the fourth embodiment.
Fig. 9(c) is an explanatory diagram illustrating a step for forming a gap between the top substrate and the partition wall member in the method of manufacturing a display medium according to the fourth embodiment.
Fig. 9(d) is a cross-sectional view of the display medium manufactured according to the method of the fourth embodiment.
Fig. 10(a) is an explanatory diagram illustrating a step for forming a gap between the top substrate and the partition wall member in a method of manufacturing a display medium according to a fifth embodiment.
Fig. 10(b) is an explanatory diagram illustrating a step for injecting the dispersion medium into the spaces in the cells in the method of manufacturing a display medium according to the fifth embodiment.
Fig. 10(c) is an explanatory diagram illustrating a step for placing the top substrate firmly against the partition wall member in the method of manufacturing a display medium according to the fifth embodiment.
Fig. 10(d) is an explanatory diagram illustrating a step for fixing the top substrate and the bottom substrate together with adhesive in the method of manufacturing a display medium according to the fifth embodiment.
Fig. 11(a) is an explanatory diagram illustrating a step for injecting the charged particle dispersion into an opening in the frame member in a method of manufacturing a display medium according to a sixth embodiment.
Fig. 11(b) is an explanatory diagram illustrating a step for bringing the partition wall member fixed to the top substrate close to the bottom substrate in the method of manufacturing a display medium according to the sixth embodiment.
Fig. 11(c) is an explanatory diagram illustrating a step for forming a space in each cell in the method of manufacturing a display medium according to the sixth embodiment.
Fig. 12 is an enlarged perspective view showing a variation of the bottom substrate in the display medium manufactured according to the methods of the preferred embodiments.

### Explanation of Reference

1,1A,1C,1D display medium
10 display surface
11a first substrate
11b X electrodes
12a second substrate
12b Y electrodes
13,13b partition wall member
13a connecting parts
20 charged particles
20a white particles
20b black particles
31 electrophoretic medium
33 charged particle dispersion
34 dispersion medium
73a first partition member
73b second partition member
83a gap
C, C1, C2 cells
R liquid chamber
S spaces

### Best Mode for Carrying Out the Invention

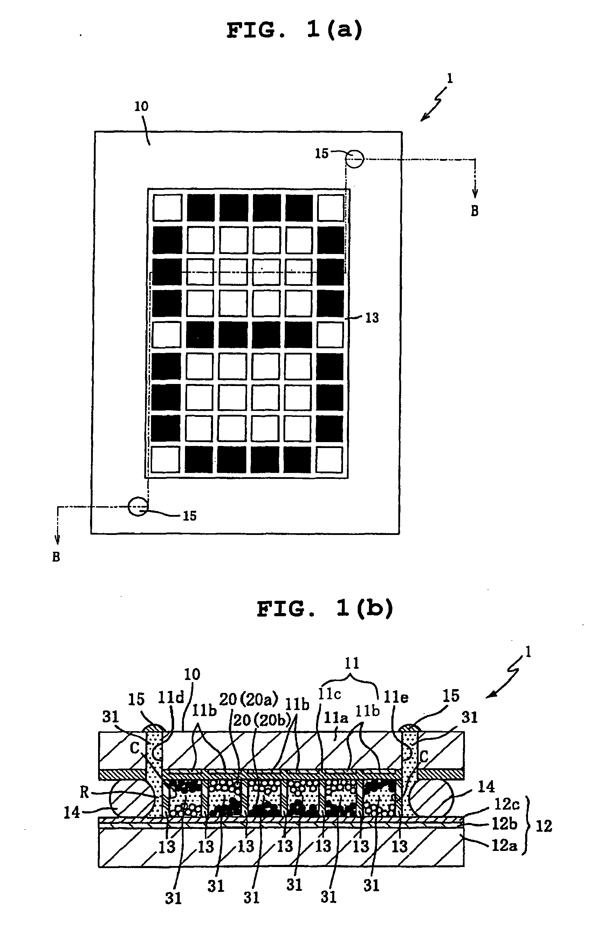

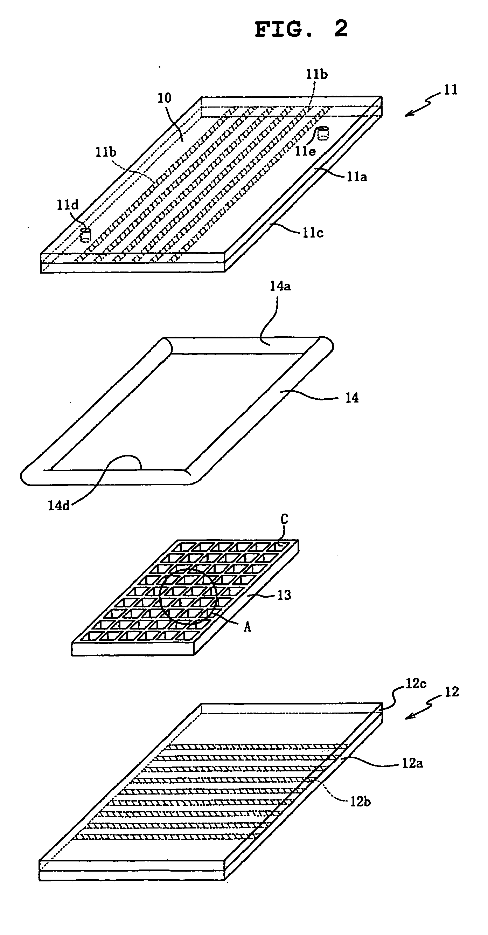

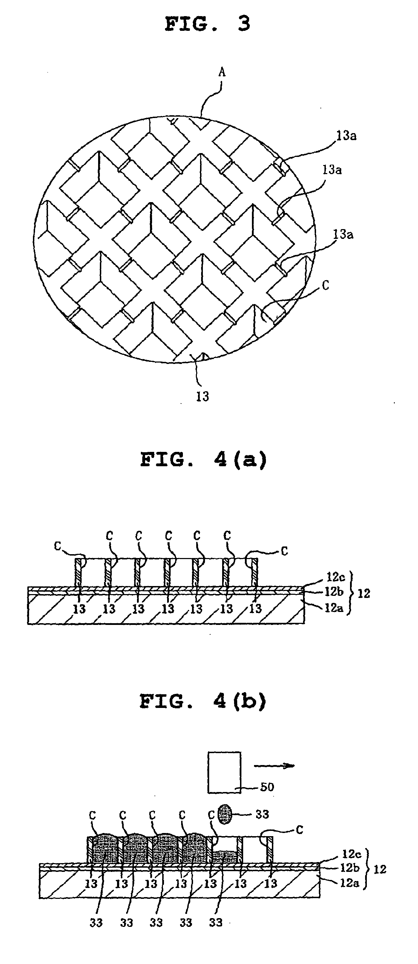

Next, a display medium and a method of manufacturing a display medium according to preferred embodiments of the present invention will be described while referring to the accompanying drawings. First, the structure of a display medium 1 according to the preferred embodiment will be described with reference to Figs. 1(a) through 3. Fig. 1(a) is a top view of the display medium 1. Fig. 1(b) is a cross-sectional view of the display medium 1 along the line B-B shown in Fig. 1(a). Fig. 2 is an exploded perspective view of the display medium 1. Fig. 3 is an enlarged perspective view of a region A in a partition wall member 13 shown in Fig. 2.

As shown in Figs. 1(a) and 1(b), the display medium 1 primarily includes a top substrate 11, a bottom substrate 12, a frame member 14, the partition wall member 13, and an electrophoretic medium 31. The top substrate 11 has a display surface 10. The bottom substrate 12 is disposed in opposition to the top substrate 11 with a prescribed space opened therebetween. The frame member 14 is arranged between the top substrate 11 and bottom substrate 12. The partition wall member 13 is bounded on the periphery by the frame member 14. The electrophoretic medium 31 fills each of a plurality of cells C formed by the partition wall member 13.

The top substrate 11 includes a plate-shaped first substrate 11a, X electrodes 11b formed on the bottom substrate 12 side surface of the first substrate 11a, and a protective film 11c covering the X electrodes 11b. An injection hole 11d and a discharge hole 11e are formed in corners of the first substrate 11a and penetrate the first substrate 11a and protective film 11c. The injection hole 11d and discharge hole 11e are sealed by sealing members 15. The bottom substrate 12 includes a plate-shaped second substrate 12a, Y electrodes 12b formed on the top substrate 11 side surface of the second substrate 12a, and a protective film 12c covering the Y electrodes 12b.

Both the first substrate 11a and the second substrate 12a have a thickness of about 500 µm in the direction in which the first substrate 11a and the second substrate 12a are stacked (to be referred to as a stacking direction hereinafter), and are formed of glass, synthetic resin, natural resin, or the like.

The X electrodes 11b and Y electrodes 12b are each formed in a plurality of substantially parallel linear patterns and are orthogonal to each other (see Fig. 2). As the materials for X electrodes 11b and Y electrodes 12b, nothing is specified as far as the materials are electrically conductive. Metal, metal oxide, or a conductive polymer can be employed as an example. However, the X electrodes 11b formed on the substrate serving as the display surface are preferably formed of ITO (indium tin oxide), polythiophene, or the like having good optical transparency. The X electrodes 11b and Y electrodes 12b are formed on the first substrate 11a and second substrate 12a, respectively, according to one of various methods well known in the art, such as electroless plating, sputtering, printing, etching, or inkjet ejection.

The protective films 11c and 12c are coated on the substrates and formed of a substance having excellent chemical resistance and the like, such as polycarbonate, polyamide, polymethyl methacrylate, polyethylene terephthalate, a fluorine compound, and a coating agent containing one of these substances. The protective films 11c and 12c cover the X electrodes 11b and Y electrodes 12b to prevent the electrophoretic medium 31 from directly contacting the X electrodes 11b and Y electrodes 12b. Hence, the degradation of the X electrodes 11b and Y electrodes 12b as a result of the direct contact with the electrophoretic medium 31 can be prevented.

The frame member 14 is formed of an epoxy resin and has a substantially rectangular frame-shape with an opening 14a in the center thereof, as shown in Fig. 2. The frame member 14 has a thickness of about 50 µm in the stacking direction. The top substrate 11 and bottom substrate 12 are respectively positioned so as to close the opening 14a, thereby forming a hermetically sealed fluid chamber R (see Fig. 1(b)) in the space therein.

The partition wall member 13 is disposed within the opening 14a of the frame member 14 and has a thickness of about 50 µm in the stacking direction. The partition wall member 13 divides the fluid chamber R into a plurality of cells C. Each cell C formed by the partition wall member 13 has substantially the same capacity, being filled with the electrophoretic medium 31.

The partition wall member 13 is formed on the first substrate 11a and the second substrate 12a according to a method such as printing, photolithography, molding, and cutting. Alternatively, a partition wall member 13 formed in advance according to these methods may be disposed on the first substrate 11a and the second substrate 12a according to a method such as adhesion, fusion, and pressure bonding.

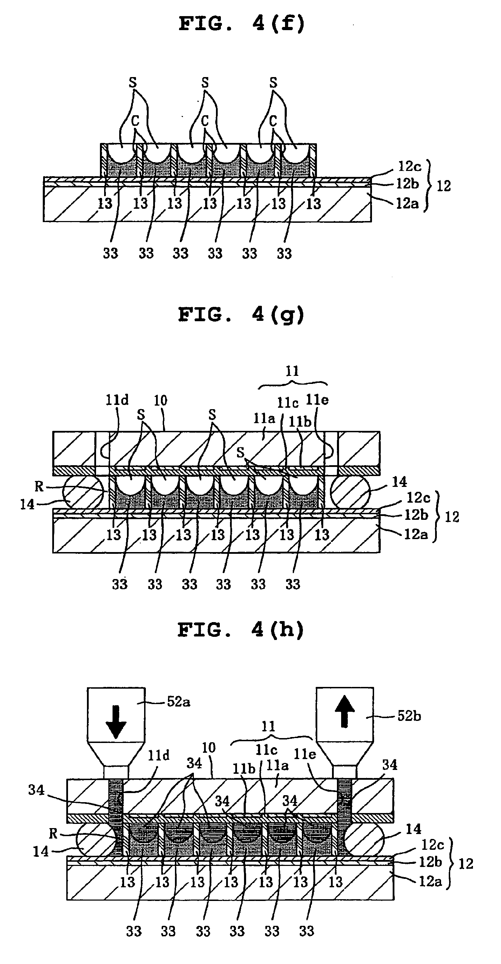

As shown in Fig. 3, connecting parts 13a for connecting adjacent cells C are formed in the top substrate 11 side surface of the partition wall member 13. The connecting parts 13a function as channels for injecting a dispersion medium 34 (see Fig. 4(h)) into each cell C, after the dispersion medium 34 has been introduced through the injection hole 11d in an injection step described later. The connecting parts 13a have a size sufficient for allowing passage of the dispersion medium 34 (electrophoretic medium 31) while restraining passage of charged particles 20 dispersed in the electrophoretic medium 31. More specifically, the width of each connecting part 13a is about 1-5 times as large as the charged particles 20 in diameter.

The electrophoretic medium 31 is a solvent having a high electrical resistance (high insulating property) formed by dissolving the dispersion medium 34 (see Fig. 4(h)) in a charged particle dispersion 33 (see Fig. 4(b)) in which the charged particles 20 have been dispersed.

The charged particles 20 include positively charged white particles 20a, and negatively charged black particles 20b. The white particles 20a and black particles 20b may be formed of a white titanium oxide and carbon black, for example, or an organic pigment such as a phthalocyanine pigment coated with a polymer resin, or micro-polymeric beads colored with a conventional dye, such as azo dye or quinoline dye, or the like. The average particle size of the white particles 20a and black particles 20b is about 1 µm.

According to the display medium 1 described above, a voltage is applied to a prescribed X electrode 11b and a prescribed Y electrode 12b, producing an electric field in the cell C positioned at the intersection of the X electrode 11b and Y electrode 12b to which the voltage was applied. The electric field causes the white particles 20a and black particles 20b in the cell C to migrate toward the top substrate 11 side or the bottom substrate 12 side, displaying an image on the display surface 10 through the contrast of white and black.

Specifically, as a result of applying an electric field according to image data by a control unit (not shown), when an electric field is generated in a display region (pixel) such that the potential of the X electrode 11b is positive relative to the Y electrode 12b, the negatively charged black particles 20b migrate toward the top substrate 11 side (X electrode 11b side), while the positively charged white particles 20a migrate toward the bottom substrate 12 side (Y, electrode 12b side). Through this operation, a black image is displayed in the display region owing to the black particles 20b that have migrated to the top substrate 11 side.

Alternatively, when an electric field is generated in a display region such that the potential of the X electrode 11b is negative relative to the Y electrode 12b, the negatively charged black particles 20b migrate toward the bottom substrate 12 side (Y electrode 12b side), while the positively charged white particles 20a migrate toward the top substrate 11 side (X electrode 11b side). Through this operation, a white image is displayed in the display region owing to the white particles 20a that have migrated to the top substrate 11 side.

By displaying white or black images in each display region in this way, the display medium 1 can display a desired image.

Next, a method of manufacturing the display medium 1 described above according to the first embodiment will be described with reference to Figs. 4(a) through 5. Figs. 4(a) through 5 are explanatory diagrams illustrating the method of manufacturing the display medium 1, showing the sequence of manufacturing steps. In the preferred embodiment, explanations will be given based on the assumption that the top substrate 11 and bottom substrate 12 are manufactured and prepared in advance.

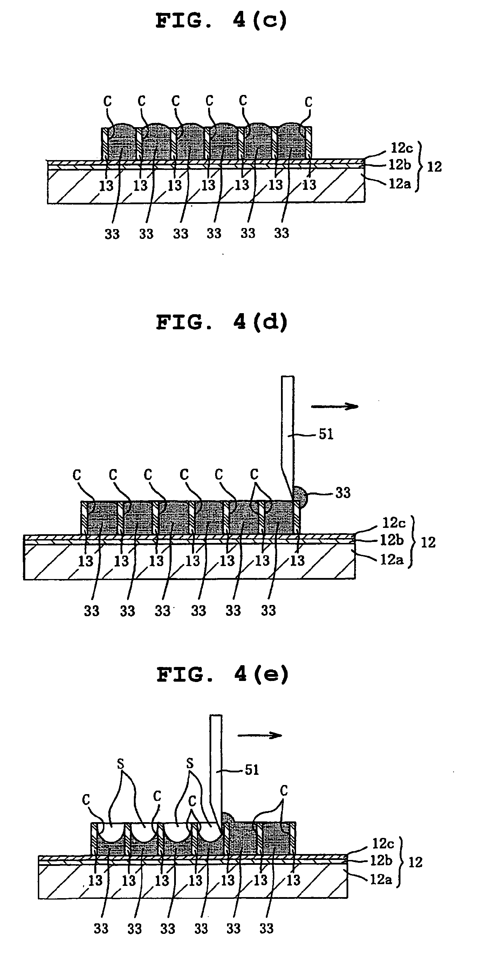

As shown in Fig. 4(a), the partition wall member 13 is fixed to the bottom substrate 12 by adhesive or the like. Next, a dispenser 50 is used to fill each cell C in the partition wall member 13 with the charged particle dispersion 33, as shown in Fig. 4(b), until all cells C have been filled with the charged particle dispersion 33, as shown in Fig. 4(c). The cells C are filled with an amount of the charged particle dispersion 33 greater than their capacity.

The charged particle dispersion 33 includes an organic solvent with charged particles 20 dispersed therein.

Specifically, the charged particle dispersion 33 is formed of 40 weight percent of ParLeam 18 (manufactured by NOF Corporation), 10 weight percent of oleyl alcohol (manufactured by Kanto Chemical Co., Inc.), 30 weight percent of the white particles 20a, and 20 weight percent of the black particles 20b, and has a greater viscosity than the electrophoretic medium 31. Accordingly, the amount of the charged particle dispersion 33 that splashes out of the cells C can be suppressed, compared to the case of filling the cells C directly with the electrophoretic medium 31 having a lower viscosity than the charged particle dispersion 33. Hence, the cells C can be effectively and uniformly filled with the charged particle dispersion 33, thereby improving the manufacturing efficiency and image quality of the display medium 1.

As an organic solvent, possible to be employed are an aromatic hydrocarbon solvent having a high insulating property (for example, benzene, toluene, and xylene), an aliphatic hydrocarbon solvent (for example, a normal or cyclic paraffinic hydrocarbon solvent such as hexane or cyclohexane, an isoparaffinic hydrocarbon solvent, or kerosene), a halogenated hydrocarbon solvent (for example, chloroform, trichloroethylene, dichloromethane, trichlorotrifluoroethylene, or ethyl bromide), an oily polysiloxane such as silicone oil, or a high-purity oil. When the manufacturing process includes a step to remove the organic solvent, following substances with a low insulating property may be used; alcohol (for example, butanol or propanol) and glycol ester (for example, dipropylene glycol monobutyl ether). Not to mention, any one or a mixture of two or more of the solvents mentioned above may be used.

Next, as shown in Fig. 4(d), a squeegee 51 is used to remove excess charged particle dispersion 33 exceeding the capacity of the cells C to smooth the surface of the partition wall member 13 (filling step). With this filling step, the cells C having substantially the same capacity can be easily filled with substantially the same volume of the charged particle dispersion 33.

Next, as shown in Fig. 4(e), the squeegee 51 is inserted and moved in the cells C that have been filled with the charged particle dispersion 33 in the filling step, scraping out substantially the same amount of charged particle dispersion 33 from each cell C (scraping step, or space forming step). This simple mechanical operation enables spaces S having substantially the same volume to be formed easily and accurately in each cell C, as shown in Fig. 4(f).

Next, as shown in Fig. 4(g), the frame member 14 and the top substrate 11 are fixed to the bottom substrate 12 and partition wall member 13 shown in Fig. 4(f). More specifically, the frame member 14 is fixed to the bottom substrate 12, and subsequently the top substrate 11 is fixed to the frame member 14 and partition wall member 13. Alternatively, the top substrate 11 and frame member 14 may be fixed in advance, and the integrated top substrate 11 and frame member 14 may be fixed to the bottom substrate 12 and partition wall member 13 at this time.

Next, as shown in Fig. 4(h), the dispersion medium 34 is injected into the injection hole 11d with an injector 52a, while a discharger 52b discharges excess dispersion medium 34 from the discharge hole 11e. In other words, the dispersion medium 34 is injected by the injector 52a, through the injection hole 11d and the connecting parts 13a (see Fig. 3), into the spaces S formed in the cells C (injection step). Hence, the spaces S function as injection spaces in which the dispersion medium 34 is introduced.

The dispersion medium 34 is a solvent having a high electrical resistance (high insulating property) that can dissolve or disperse an organic solvent contained in the charged particle dispersion 33. In the preferred embodiment, ParLeam 4 (manufactured by NOF Corporation) is used.

Other examples of the dispersion medium 34 are an aromatic hydrocarbon solvent (for example, benzene, toluene, and xylene), an aliphatic hydrocarbon solvent (for example, a normal or cyclic paraffinic hydrocarbon solvent such as hexane or cyclohexane, an isoparaffinic hydrocarbon solvent, or kerosene), a halogenated hydrocarbon solvent (for example, chloroform, trichloroethylene, dichloromethane, trichlorotrifluoroethylene, or ethyl bromide), an oily polysiloxane such as silicone oil, or a high-purity oil. Any one or a mixture of two or more of the solvents mentioned above can be employed.

Further, in order to enhance dispersion of the charged particles 20, a nonionic, anionic, cationic, and zwitterionic surfactant or a resin such as polyvinyl alcohol may be added to the dispersion medium 34. Other possible additives for the dispersion medium 34 include an electrolyte, charge control agent, corrosion inhibitor, friction modifier, and ultraviolet absorber.

In this way, the dispersion medium 34 is injected into the cells C through the connecting parts 13a connecting adjacent cells C, while the cells C are sandwiched between the top substrate 11 and bottom substrate 12. Further, since the dispersion medium 34 contains no solid components such as particles that could impede injection, the dispersion medium 34 can be injected into the cells C at a low pressure and in a short amount of time. Further, the connecting parts 13a connecting neighboring cells C are formed of a size for allowing the passage of the dispersion medium 34 while restricting the passage of charged particles 20, thereby preventing the charged particles 20 from migrating between cells C as the dispersion medium 34 is introduced. Hence, the ratio of charged particles 20 distributed in each cell C does not change, thereby suppressing a drop in image quality.

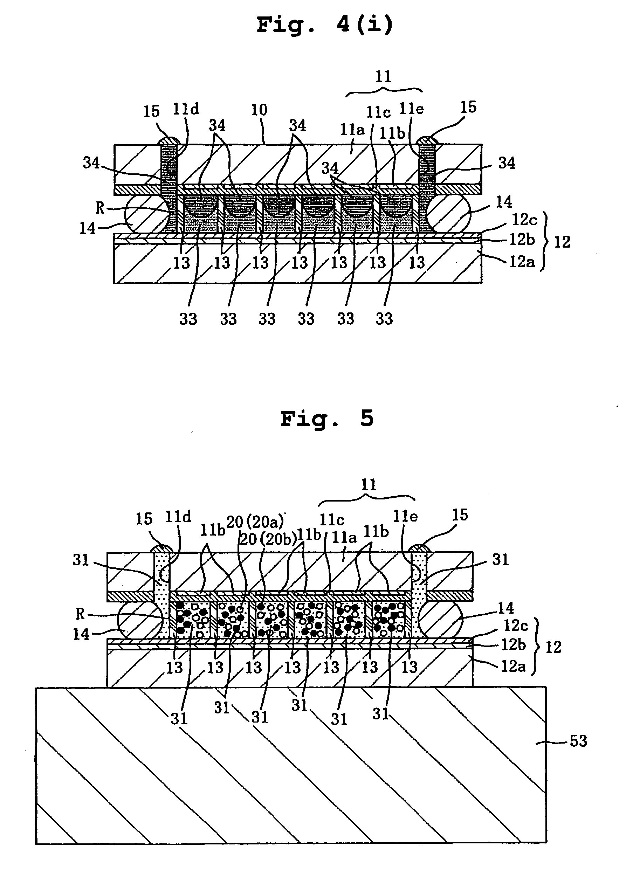

Next, as shown in Fig. 4(i), the injection hole 11d and discharge hole 11e are sealed with the sealing members 15 to prevent the dispersion medium 34 injected in the injection step from leaking out of the display medium 1.

Next, as shown in Fig. 5, an ultrasonic vibrating device 53 vibrates the display medium 1 shown in Fig. 4(i) (vibrating step). In the vibrating step, the charged particle dispersion 33 and dispersion medium 34 are vibrated to effectively mix (dissolve or disperse) the dispersion medium 34 in the charged particle dispersion 33, thereby producing the electrophoretic medium 31 having prescribed properties.

During the vibrating step, a voltage alternated between a positive potential and a negative potential is applied to the X electrodes 11b and Y electrodes 12b (voltage applying step). Since the white particles 20a and black particles 20b move between the top substrate 11 side and the bottom substrate 12 side in the cells C through the voltage applying step, the dispersion medium 34 can be effectively mixed (dissolved or dispersed) in the charged particle dispersion 33 to produce the electrophoretic medium 31 having prescribed properties.

Further, in the voltage applying step, a higher voltage than that applied for the display medium 1 can be applied. Accordingly, the movements of the white particles 20a and black particles 20b are further intensified, thereby further promoting dissolution of the dispersion medium 34 in the charged particle dispersion 33.

In the method of manufacturing the display medium 1 according to the first embodiment described above, each cell C can be uniformly filmed with the charged particle dispersion 33 containing the dispersed charged particles 20 before the partition wall member 13 is sandwiched between the top substrate 11 and bottom substrate 12. Further, each cell C has substantially the same capacity, and is filled with substantially the same amounts of the charged particle dispersion 33 and dispersion medium 34. Hence, the electrophoretic medium 31 having a substantially uniform dispersion of charged particles 20 can be produced, leading to image quality improvement. Further, the electrophoretic medium 31 produced in this way can be provided with a substantially uniform viscosity, surface tension, resistivity, and other properties. Also, the spaces S are formed in the cells C after the cells C have been completely filled with substantially the same amount of the charged particle dispersion 33. On the other hand, spaces S having substantially the same volume may be formed in each cell C by filling each cell C with a substantially uniform volume of charged particle dispersion 33 less than the capacity of the cell C. However, due to the dense arrangement of the cells C, it is difficult to form spaces S of the same volume in the cells C through this method. In comparison, easier and more accurate is to form spaces S of the same volume in each cell by filling the cells C with substantially the same volume of charged particle dispersion 33 as the capacity of the cells C, and subsequently by forming spaces S of substantially the same volume in each cell C. Therefore, the occurrence of display irregularities can be suppressed, enhancing image quality.

Further, the connecting parts 13a connecting each cell C have a size for allowing passage of the dispersion medium 34 while suppressing passage of the charged particles 20. Accordingly, this construction prevents the charged particles 20 from migrating between cells C through the connecting parts 13a, even when the display medium 1 is tilted to the horizontal plane for a long period of time, thereby preventing the uneven concentration of charged particles in the cells C.. By suppressing such irregularities, the present invention enhances image quality.

The display medium 1 manufactured as described above can produce images of improved quality with no irregularities when driven by a voltage of 80 V. Furthermore, the display medium 1 can maintain this improved image quality with no irregularities, even when driven again after stored at a slanted orientation to the horizontal plane for a period of one month.

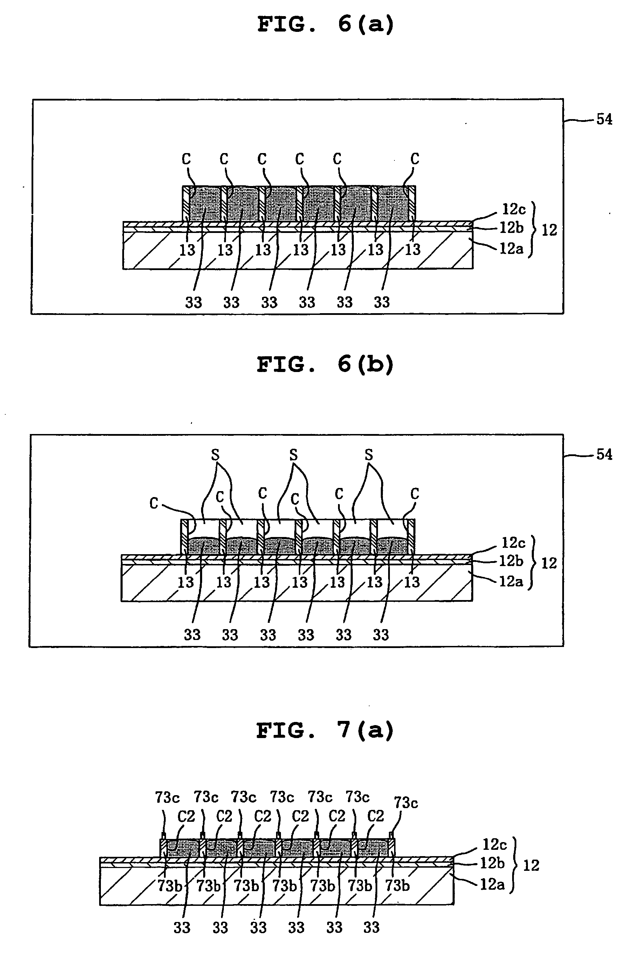

Next, a method of manufacturing a display medium according to a second embodiment of the present invention will be described with reference to Figs. 6(a) and 6(b).

The method of manufacturing a display medium according to the second embodiment is identical to the method of manufacturing a display medium according to the first embodiment, except in the steps for forming the spaces S in the cells C (the steps shown in Figs. 4(e) and 4(f)). Therefore, only the steps for forming the spaces S in the cells C will be described below. In the first embodiment described above, the spaces S are formed by scraping the charged particle dispersion 33 out of the cells C with the squeegee 51, as shown in Fig. 4(e). In the second embodiment, the spaces S are formed by drying the charged particle dispersion 33.

More specifically, after the cells C have been filled completely full with the charged particle dispersion 33, the bottom substrate 12 and partition wall member 13 are placed in a dryer 54, as shown in Fig. 6(a), to dry the charged particle dispersion 33.

Consequently, the volatile components in the charged particle dispersion 33 are vaporized, leaving spaces S of substantially the same volume in the cells C, as shown in Fig. 6(b). That is to say, a state substantially identical to that shown in Fig. 4(f) in the first embodiment is achieved.

In the method of manufacturing a display medium according to the second embodiment described above, since the spaces S are formed by drying the charged particle dispersion 33 in the dryer 54 after the cells C have been filled with the charged particle dispersion 33, spaces S of substantially the same volume can be easily and accurately formed in each cell C. Therefore, an electrophoretic medium 31 having a substantially uniform dispersion of charged particles 20 can be produced in each cell C, and image quality can be improved. This method can also produce an electrophoretic medium 31 having substantially uniform properties, such as viscosity, surface tension, and resistivity, thereby improving the manufacturing efficiency of the display medium 1.

Hence, the display medium 1 manufactured as described above can produce images of improved quality with no irregularities when driven by a voltage of 80 V. The display medium 1 can maintain this improved image quality with no irregularities, even when driven again after stored at a slanted orientation to the horizontal plane for a period of one month.

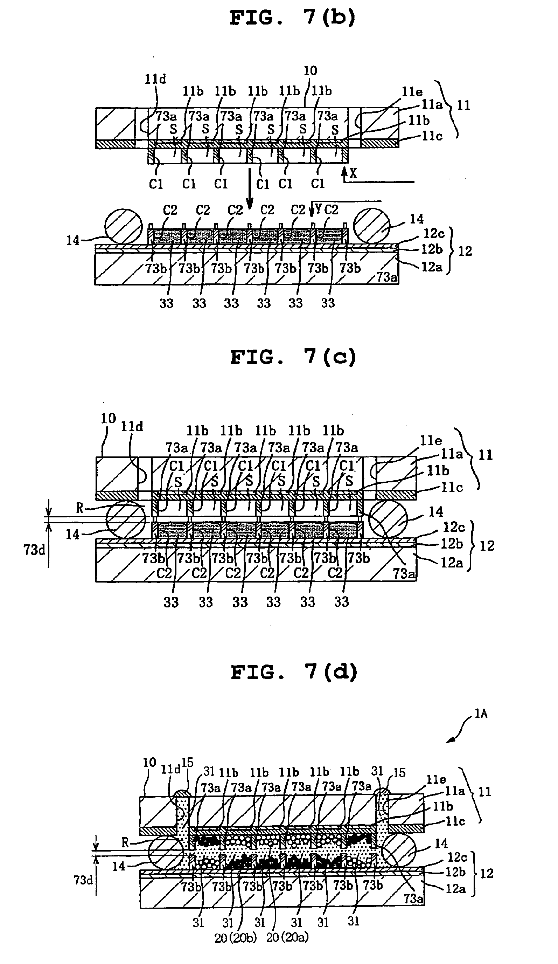

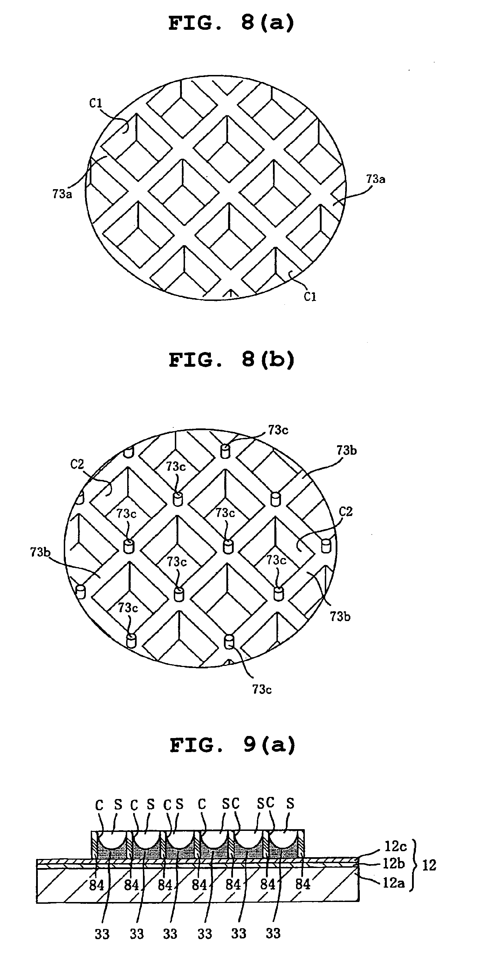

Next, a method of manufacturing a display medium according to a third embodiment of the present invention will be described with reference to Figs. 7(a) through 8(b). Figs. 7(a) through 7(d) are explanatory diagrams illustrating the method of manufacturing a display medium 1A according to the third embodiment. Fig. 8 (a) is an enlarged view of a first partition member 73a viewed in the X-direction indicated by the arrow in Fig. 7(b). Fig. 8(b) is an enlarged view of a second partition member 73b viewed in the Y-direction indicated by the arrow in Fig. 7(b). Like parts and components in the display medium 1A manufactured according to the method of the third embodiment and the display medium 1 described above are designated with the same reference numerals to avoid duplicating description.

First, the structure of the display medium 1A manufactured according to the method of the third embodiment will be described. In place of the partition wall member 13 in the display medium 1 described above, the display medium 1A includes a first partition member 73a and a second partition member 73b joined with each other in the stacking direction, as shown in Fig. 7(d).

The first partition member 73a is fixed to the top substrate 11 for dividing substantially half the region of the fluid chamber R on the top substrate 11 side into a plurality of cells C1. The first partition member 73a has a thickness of about 25 µm in the stacking direction. As shown in Fig. 8(a), the first partition member 73a has a flat surface for bonding with the second partition member 73b.

The second partition member 73b is fixed to the bottom substrate 12 for dividing substantially half the region of the fluid chamber R on the bottom substrate 12 side into a plurality of cells C2. The second partition member 73b has a thickness of about 25 µm in the stacking direction. As shown in Fig. 8(b), a protrusion 73c is provided on the surface of the second partition member 73b opposing the first partition member 73a. The protrusion 73c forms connecting parts 73d for connecting neighboring cells (see Fig. 7(c)) between the second partition member 73b and first partition member 73a. The protrusion 73c is formed at a height corresponding to the size of the charged particles, or a height of about 3 µm in the preferred embodiment.

Next, the method of manufacturing the display medium 1A will be described. The method of manufacturing the display medium 1A according to the third embodiment is identical to the method of manufacturing the display medium 1 according to the first embodiment, except in the steps for forming the spaces S.. Therefore, only the steps to form the spaces S will be described below. In the first embodiment described above, the spaces S are formed by scraping the charged particle dispersion 33 out of the cells C with the squeegee 51, as shown in Fig. 4(e). However, in the third embodiment, the spaces S are formed by joining and fixing the first partition member 73a to the second partition member 73b fully filled with the charged particle dispersion 33. Through this process, the connecting parts 73d connecting neighboring cells (see Fig. 7(c)) are formed between the second partition member 73b and first partition member 73a.

When larger spaces S are required, a step for scraping the charged particle dispersion 33 out of the second partition member 73b with the squeegee 51 may be added.

More specifically, as shown in Fig. 7(a), the cells C2 formed by the second partition member 73b are filled with the charged particle dispersion 33.

Next, as shown in Fig. 7(b), the frame member 14 is fixed to the bottom substrate 12 and second partition member 73b, while the first partition member 73a and top substrate 11 are brought near this assembly.

As shown in Fig. 7(c), the top substrate 11 is placed in contact with the frame member 14 and the first partition member 73a in contact with the second partition member 73b. Accordingly, spaces S are formed by each cell C1 formed by the first partition member 73a.

While the protrusion 73c are provided on the second partition member 73b in the preferred embodiment, the concave-shaped connecting parts 13a shown in Fig. 3 may be formed in the second partition member 73b instead.

The method of manufacturing a display medium according to the third embodiment described above allows spaces S of substantially the same volume to be formed easily and accurately in each cell C1. Therefore, in each of the cells C1 and cells C2 produced is an electrophoretic medium 31 with charged particles 20 substantially uniformly dispersed therein, improving image quality.

Hence, the display medium 1A manufactured as described above can produce images of improved quality with no irregularities when driven by a voltage of 80 V. The display medium 1A can also maintain this improved image quality with no irregularities, even when driven again after stored at a slanted orientation to the horizontal plane for a period of one month.

Next, a method of manufacturing a display medium according to a fourth embodiment of the present invention will be described with reference to Figs. 9 (a) through 9(d). Figs. 9(a) through 9(d) are explanatory diagrams illustrating a method of manufacturing a display medium 1C according to the fourth embodiment. Like parts and components in the display medium 1C manufactured according to the method of the fourth embodiment identical to those in the display medium 1 described above are designated with the same reference numerals to avoid duplicating description.

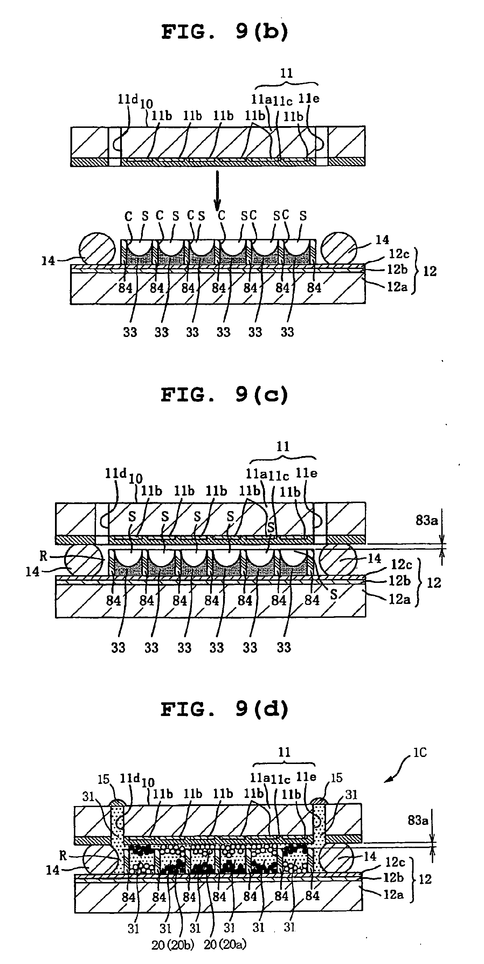

First, the structure of the display medium 1C manufactured according to the method of the fourth embodiment will be described with reference to Fig. 9(d). In place of the partition wall member 13 in the display medium 1 described above, the display medium 1C includes a third partition member 84. The third partition member 84 has a thickness of about 45 µm, so as not to contact the top substrate 11, and the connecting parts 13a are not formed therein.

Next, the method of manufacturing the display medium 1C will be described. The method of manufacturing the display medium 1C according to the fourth embodiment is nearly identical to the method of manufacturing the display medium 1 in the first embodiment. The bottom substrate 12 and the third partition member 84 shown in Fig. 9(a) correspond to the bottom substrate 12 and the partition wall member 13 shown in Fig. 4(f) according to the first embodiment. Fig. 9(a) shows the state after performing the scraping step (space forming step).

As shown in Fig. 9(b), the frame member 14 formed of a UV-curable epoxy adhesive is disposed on the bottom substrate 12. Next, the top substrate 11 is placed on the frame member 14 using a pressing tool (not shown) set so that the distance between the top substrate 11 and bottom substrate 12 is approximately 50 µm. Subsequently, the frame member 14 is irradiated with ultraviolet light so that the UV-curable epoxy adhesive constituting the frame member 14 hardens.

Through this process, a gap 83a is formed between the top substrate 11 and partition wall member 84, as shown in Fig. 9(c). The gap 83a functions as the connecting parts 13a described above (see Fig. 3). The dispersion medium 34 is introduced into the spaces S through the gap 83a of approximately 5 µm.

Hence, the display medium 1C manufactured as described above can produce images of improved quality with no irregularities when driven by a voltage of 80 V. The display medium 1C can maintain this improved image quality with no irregularities, even when driven again after stored at a slanted orientation to the horizontal plane for a period of one month.

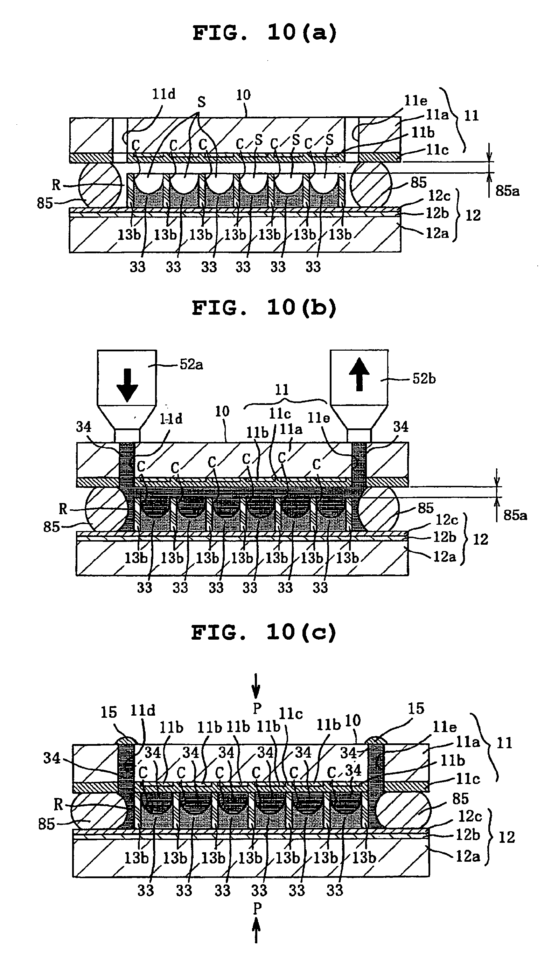

Next, a method of manufacturing a display medium according to a fifth embodiment of the present invention will be described with reference to Figs. 10(a) through 10(d). Figs. 10(a) through 10(d) are explanatory diagrams illustrating the method of manufacturing a display medium 1D according to the fifth embodiment. Parts and components in the display medium 1D manufactured according to the method of the fifth embodiment identical to those in the display medium 1 described above are designated with the same reference numerals to avoid duplicating description.

First, the structure of the display medium 1D manufactured according to the method of the fifth embodiment will be described. In place of the frame member 14 formed of resin in the display medium 1 described above, the display medium 1D is provided with an elastic first frame member 85. Further, the display medium 1D is provided with a partition wall member 13b in which no connecting parts 13a are formed in place of the partition wall member 13 having the connecting parts 13a in the display medium 1 described above.

The first frame member 85 has elasticity, including a porous epoxy sheet having a thickness of about 100 µm. As shown in Fig. 10(a), the first frame member 85 is formed thicker than the thickness of the partition wall member 13b in the stacking direction before the dispersion medium 34 is injected into the spaces S.

Next, the method of manufacturing the display medium 1D will be described. The method of manufacturing the display medium 1D according to the fifth embodiment is identical to the manufacturing method according to the first embodiment until the step before fixing the frame member 14 and top substrate 11 to the bottom substrate 12 and partition wall member 13 in the first embodiment (Fig. 4(f)).. The description of the method according to the fifth embodiment will begin from the step for fixing the first frame member 85 to the bottom substrate 12 hereinafter. As shown in Fig.. 10(a), the first frame member 85 is placed on the bottom substrate 12, and the top substrate 11 is disposed on the first frame member 85 using a pressure device (not shown).

The weight of the top substrate 11 elastically deforms the first frame member 85 to a thickness of about 60 µm in the stacking direction. Since the thickness of the partition wall member 13b is about 50 µm, a gap 85a of about 10 µm is formed between the partition wall member 13b and the top substrate 11.

Next, as shown in Fig. 10(b), the dispersion medium 34 is injected into the injection hole 11d with the injector 52a, and the discharger 52b discharges excess dispersion medium 34 out of the discharge hole 11e. In other words, the dispersion medium 34 introduced from the injector 52a is injected into the spaces S formed in each cell C through the injection hole 11d and the gap 85a (injection step).

Next, as shown in Fig. 10(c), the pressure device is used to apply a large pressure to the top substrate 11 and bottom substrate 12 in the direction of the arrows P, elastically deforming the first frame member 85 until the top substrate 11 firmly contacts the partition wall member 13b (until the gap 85a is eliminated).

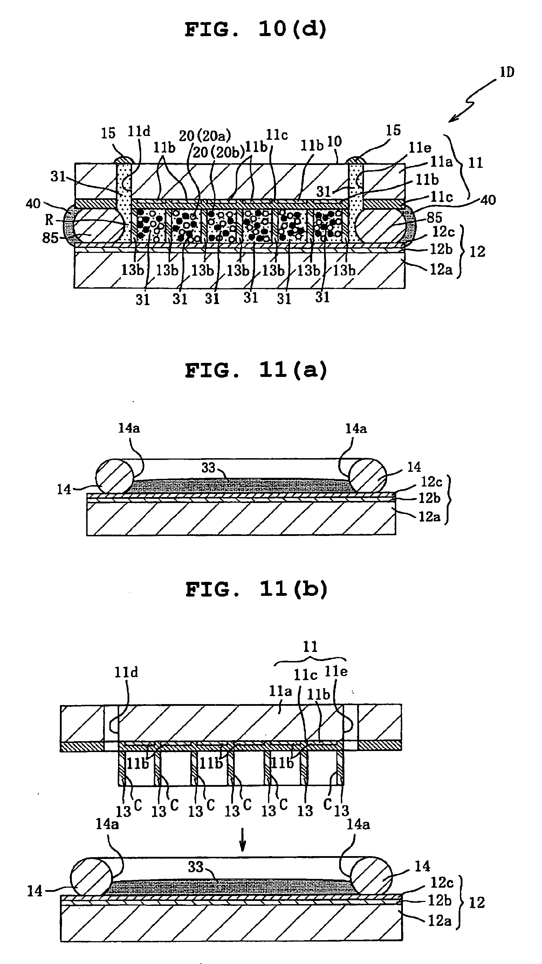

Finally, as shown in Fig. 10(d), the top substrate 11 and bottom substrate 12 are fixed together by an adhesive 40 to prevent the two substrates from separating due to the repelling force of the first frame member 85. In this way, the distance between the top substrate 11 and bottom substrate 12 is fixed. Here, the adhesive 40 is applied around the periphery of the first frame member 85. Then, the dispersion medium 34 and charged particle dispersion 33 are mixed in the vibrating step as in the manufacturing method according to the first embodiment (Fig. 5), and the electrophoretic medium 31 is produced. The display medium 1D is accordingly manufactured.

In this way, the method of manufacturing a display medium according to the fifth embodiment can produce the display medium 1D in which the passages between adjacent cells C have been blocked off. Hence, this method prevents charged particles 20 distributed more or less uniformly in each cell C from migrating between adjacent cells C, thereby preventing a decline in image quality.

Hence, the display medium 1D manufactured as described above can produce images of improved quality with no irregularities when driven by a voltage of 80 V. The display medium 1 can maintain this improved image quality with no irregularities, even when driven again after stored at a slanted orientation to the horizontal plane for a period of one month.

Next, a method of manufacturing a display medium according to a sixth embodiment of the present invention will be described with reference to Figs. 11(a) through 11(c). Figs. 11(a) through 11(c) are explanatory diagrams illustrating the method for manufacturing a display medium 1 according to the sixth embodiment. The method of manufacturing the display medium 1 according to the sixth embodiment is identical to the method of manufacturing the display medium 1 according to the first embodiment, except in the step for fixing the partition wall member 13 to the bottom substrate 12 (illustrated in Fig. 4(a)), the step for filling the cells C with the charged particle dispersion 33 (illustrated in Figs. 4(b) and 4(c)), and the step for forming the spaces S in the cells C (illustrated in Figs. 4(b)-4(f)). Hence, the following description will only cover the steps for fixing the partition wall member 13 to the bottom substrate 12, for filling the cells C with the charged particle dispersion 33, and for forming the spaces S in the cells C.

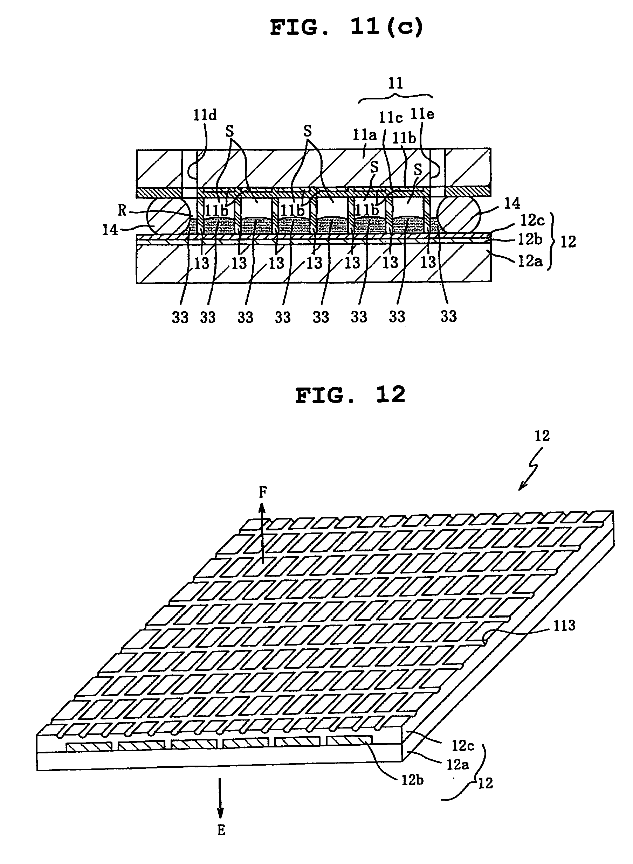

In the sixth embodiment, the frame member 14 is disposed on the bottom substrate 12, and the charged particle dispersion 33 is injected into the opening 14a formed in the frame member 14, as shown in Fig. 11(a). Next, as shown in Fig. 11(b), the partition wall member 13 fixed to the top substrate 11 with adhesive of the like is brought toward the bottom substrate 12. As a result, the charged particle dispersion 33 injected into the opening 14a of the frame member 14 enters each of the cells C formed in the partition wall member 13, as shown in Fig. 11(c). At the same time, the spaces S are formed in the cells C, achieving substantially the same state as that shown in Fig. 4(g) in the first embodiment.

According to the method of manufacturing a display medium according to the sixth embodiment described above, it is not necessary to fill each of the cells C with the charged particle dispersion 3.3 using the dispenser 50, as described in the first embodiment. Since the prescribed amount of charged particle dispersion 33 can be injected into the opening 14a of the frame member 14 having a much larger opening than the cells C, this method improves the production efficiency.

Hence, the display medium 1 manufactured as described above can produce images of improved quality with no irregularities when driven by a voltage of 80 V" The display medium 1 can maintain this improved image quality with no irregularities, even when driven again after stored at a slanted orientation to the horizontal plane for a period of one month.

While the invention has been described in detail with reference to specific embodiments thereof, embodiments of this invention are not confined to those described above, and it would be apparent to those skilled in the art that many modifications and variations may be made therein without departing from the spirit of the invention.

For example, in the preferred embodiments described above, as passages for allowing the passage of the dispersion medium 34, connecting parts 13a are formed in the partition wall member 13, or the gaps 83a are formed between the top substrate 11 and third partition member 84. However, passages for the dispersion medium 34 are not limited to the preferred embodiments described above.

Here, a variation of the passages for the dispersion medium 34 will be described with reference to Fig. 12. Fig. 12 is an enlarged perspective view of the bottom substrate 12 oriented such that the side opposing the top substrate 11 is indicated by an arrow F, while the outer side is indicated by an arrow E in the drawing. In the protective film 12c of the bottom substrate 12, grooves 113 are formed in a lattice configuration.

The grooves 113 formed in the protective film 12c function as passages for allowing passage of the dispersion medium 34.

Further, each of the cells C may be filled with a quantity of the charged particle dispersion 33 capable of ensuring that the spaces S in the cells C have a substantially equal volume.

Further, when filling the cells C with the charged particle dispersion 33, the top substrate 11 and the like may be heated and cooled within a range that does not adversely affect the top substrate 11, bottom substrate 12, partition wall member 13 and the like, in order to regulate the viscosity of the charged particle dispersion 33.

Moreover, in the third embodiment described above, the connecting parts 73d are formed by providing the protrusion 73c on the second partition member 73b. However, rather than providing the protrusion 73c, gaps formed between the first partition member 73a and second partition member 73b can be used as connecting parts.

Further, a masking step may be added before filling the cells C in the partition wall member 13 with the charged particle dispersion 33, wherein a mask film (mask plate) with holes corresponding to positions of the cells C is placed over the surface of the partition wall member 13.

In the case above, this mask can prevent the charged particle dispersion 33 from being attached to the surface of the partition wall member 13, when filling the cells C with the charged particle dispersion 33 in the filling step, or scraping the charged particle dispersion 33 out of the cells C with the squeegee 51. Accordingly, the distance between the top substrate 11 and bottom substrate 12 can be uniformly determined, improving the image quality. Here, the mask film (mask plate) is removed before the partition wall member 13 is covered with the top substrate 11 and bottom substrate 12.

## Claims

1. A method of manufacturing a display medium (1, 1A, 1C, 1D), the display medium (1, 1A, 1C, 1D) comprising:
a first substrate (11) constituting a display surface (10) ;
a second substrate (12) disposed in opposition to the first substrate for forming a fluid chamber (R) between the first substrate (11) and the second substrate (12);
a partition wall member (13) interposed between the first substrate (11) and the second substrate (12) and dividing the fluid chamber (R) into a plurality of cells (C); and
an electrophoretic medium (31) in which a charged particle dispersion (33) comprising an organic solvent with dispersed charged particles (20) is dissolved or dispersed in a dispersion medium (34) for filling the plurality of cells (C);
wherein the charged particles (20) moving between the first substrate (11) and the second substrate (12) to display an image on the display surface (10) based on the directions of electric fields generated between the first substrate (11) and the second substrate (12);
the method of manufacturing a display medium (1, 1A, 1C, 1D) comprising:
a filling step for filling the plurality of cells (C) with the charged particle dispersion (33) before interposing the partition wall member (13) between the first substrate (11) and the second substrate (12); and
an injection step for injecting the dispersion medium (34) for dissolving or dispersing the charged particle dispersion (33) into the plurality of cells (C) filled with the charged particle dispersion (33) in the filling step.

2. The method of manufacturing a display medium (1, 1A, 1C, 1D) according to claim 1, wherein the charged particle dispersion (33) has a higher viscosity than the electrophoretic medium (31).

3. The method of manufacturing a display medium (1, 1A, 1C, 1D) according to claim 1, further comprising a vibrating step for vibrating the charged particle dispersion (33) and the dispersion medium (34) after the injection step.

4. The method of manufacturing a display medium (1, 1A, 1C, 1D) according to claim 3, wherein the vibrating step further has a voltage applying step for applying a voltage between the first substrate (11) and the second substrate (12) for moving the charged particles (20) within the plurality of cells (C) during vibrating.

5. The method of manufacturing a display medium (1, 1A, 1C, 1D) according to claim 1, further comprising a voltage applying step for applying a voltage between the first substrate (11) and the second substrate (12) for moving the charged particles (20) within the plurality of cells (C) following the injection step.

6. The method of manufacturing a display medium (1, 1A, 1C, 1D) according to claim 1, wherein the plurality of cells (C) has substantially the same capacity; and
the filling step comprises filling each of the plurality of cells (C) with substantially the same volume of the charged particle dispersion (33) to maintain an injection space (S) in each of the plurality of cells (C) for injecting the dispersion medium (34) in the injection step.

7. The method of manufacturing a display medium (1, 1A, 1C, 1D) according to claim 6, wherein the filling step comprises:
a complete filling step for completely filling the plurality of cells (C) with a volume of the charged particle dispersion (33) substantially equal to the capacity of the plurality of cells (C); and
a space forming step for forming the injection spaces (S) in the plurality of cells (C) after the plurality of cells (C) is completely filled with the charged particle dispersion (33) in the complete filling step.

8. The method of manufacturing a display medium (1, 1A, 1C, 1D) according to claim 7, wherein the space forming step comprises a scraping step for scraping substantially the same amount of the charged particle dispersion (33) out of the plurality of cells (C) completely filled in the complete filling step.

9. The method of manufacturing a display medium (1, 1A, 1C, 1D) according to claim 7, wherein the space forming step comprises a drying step for drying the charged particle dispersion (33) in the plurality of cells (C) completely filled in the complete filling step.

10. The method of manufacturing a display medium (1, 1A, 1C, 1D) according to claim 1, wherein the display medium (1,1A, 1C, 1D) further comprises the partition wall member (13) having a first structure (73a) joined with the first substrate (11) and a second structure (73b) joined with the second substrate (12),
wherein a plurality of first cells (C1) of substantially the same capacity is formed in the first structure (73a) and a plurality of second cells (C2) of substantially the same capacity is formed in the second structure (73b) opposing the plurality of first cells (C1); and
each of the plurality of cells (C) comprises one of the plurality of first cells (C1) and one of the plurality of second cells (C2) opposing the plurality of first cells (C1);,
wherein the filling step further comprises:
a complete filling step for filling the plurality of first cells (C1) with the charged particle dispersion (33) of substantially the same amount as the capacity of the plurality of first cells (C1); and
a joining step for joining the first structure (73a) and the second structure (73b) after the plurality of first cells (C1) is completely filled with the charged particle dispersion (33) in the complete filling step.

11. The method of manufacturing a display medium (1, 1A, 1C, 1D) according to claim 1, wherein the display medium (1, 1A, 1C, 1D) further comprises a plurality of connecting parts (13a) formed in the plurality of cells (C) for connecting neighboring cells (C) when the plurality of cells (C) is interposed between the first substrate (11) and the second substrate (12),
wherein the dispersion medium (34) has a lower viscosity than the charged particle dispersion (33); and
the dispersion medium (34) is injected into the plurality of cells (C) through the plurality of connecting parts (13a) while the plurality of cells (C) is interposed between the first substrate (11) and the second substrate (12) in the injecting step.

12. The method of manufacturing a display medium (1, 1A, 1C, 1D) according to claim 11, wherein the plurality of connecting parts (13a) is of a size for allowing passage of the dispersion medium (34) while restraining passage of the charged particles (20).

13. The method of manufacturing a display medium (1, 1A, 1C, 1D) according to claim 1, wherein the display medium (1, 1A, 1C, 1D) further comprises a gap (83a) formed between the first substrate (11) and the partition wall member (13),
wherein the dispersion medium (34) is injected into the plurality of cells (C) via the gap (8.3a) while the plurality of cells (C) is interposed between the first substrate (11) and the second substrate (12).

14. A display medium (1, 1A, 1C, 1D) comprising:
a first substrate (11) constituting a display surface (10);
a second substrate (12) disposed in opposition to the first substrate for forming a fluid chamber (R) between the first substrate (11) and the second substrate (12);
a partition wall member (13) interposed between the first substrate (11) and the second substrate (12) and dividing the fluid chamber (R) into a plurality of cells (C); and
an electrophoretic medium (31) in which a charged particle dispersion (33) comprising an organic solvent with dispersed charged particles (20) is dissolved or dispersed in a dispersion medium (34) for filling the plurality of cells (C);
wherein the charged particles (20) move between the first substrate (11) and the second substrate (12) for displaying an image on the display surface (10) based on the directions of electric fields generated between the first substrate (11) and the second substrate (12); and
a plurality of connecting parts (13a) is formed in the plurality of cells (C) for providing communication between neighboring cells (C), and has a size for allowing the passage of the dispersion medium (34) while restraining the passage of the charged particles (20) when the plurality of cells (C) is interposed between the first substrate (11) and the second substrate (12).
